Europäisches Patentamt

European Patent Office

Office européen des brevets

(19)

(11) Numéro de publication: **0 534 535 A1**

## (12) DEMANDE DE BREVET EUROPEEN

(21) Numéro de dépôt: **92202839.4**

(22) Date de dépôt: **16.09.92**

(51) Int. Cl.5: **G21K 1/06**

(30) Priorité: **25.09.91 FR 9111827**

(43) Date de publication de la demande:
**31.03.93 Bulletin 93/13**

(84) Etats contractants désignés:
**DE FR GB IT NL**

(71) Demandeur: **LABORATOIRES D'ELECTRONIOUE PHILIPS**
**22, Avenue Descartes**
**F-94450 Limeil-Brévannes(FR)**

(84) **FR**

(71) Demandeur: **N.V. Philips' Gloeilampenfabrieken**
**Groenewoudseweg 1**

**NL-5621 BA Eindhoven(NL)**

(84) **DE GB IT NL**

(72) Inventeur: **Boher, Pierre, Société Civile S.P.I.D**
**156, Boulevard Haussmann**
**F-75008 Paris(FR)**
Inventeur: **Houdy, Philippe, Société Civile S.P.I.D**
**156, Boulevard Haussmann**
**F-75008 Paris(FR)**

(74) Mandataire: **Landousy, Christian et al**
**Société Civile S.P.I.D. 156, Boulevard Haussmann**
**F-75008 Paris (FR)**

(54) **Dispositif incluant un miroir fonctionnant dans le domaine des rayons X ou des neutrons.**

(57) Dispositif incluant un miroir fonctionnant dans le domaine des rayons X ou de neutrons, à une longueur d'onde λ, ce miroir comprenant un substrat ayant une face concave et une structure multicouches périodique, de période d réfléchissante dans le domaine de longueurs d'onde choisi, disposée sur cette face concave du substrat, caractérisé en ce que le substrat du miroir est constitué par une feuille de mica dont les faces sont des plans de clivage préférentiel et sont courbées pour que le miroir présente une forme de partie de tube, la structure multicouches étant disposée dans la concavité ainsi formée, le(s) rayon(s) de courbure du miroir étant prévu(s) pour que ce dernier reçoive et réfléchisse chacun des rayons d'un faisceau divergent, sous un angle de Bragg $\theta$ constant, choisi en fonction de la période d de la structure multicouches et de la longueur d'onde λ pour vérifier la loi de Bragg qui s'énonce $2d \sin\theta = k\lambda$ où k est une constante.

FIG.2

EP 0 534 535 A1

L'invention concerne un dispositif incluant un miroir fonctionnant dans le domaine des rayons X ou des neutrons, à une longueur d'onde $\lambda$, ce miroir comprenant un substrat ayant une face concave et une structure multicouches périodique, de période d, réfléchissante dans le domaine de longueurs d'onde choisi, disposée sur cette face concave du substrat.

L'invention trouve son application dans la réalisation d'optiques pour spectromètres de fluorescence, diffractomètres à rayons X ou pour synchrotrons, par exemple.

Il est déjà connu du brevet US 6/411 767 du 26 août 1982, de réaliser un miroir concave réfléchissant dans le domaine des rayons X.

L'application recherchée pour le miroir connu est la microlithographie.

Le dispositif proposé par le document cité a pour but de résoudre le problème technique consistant essentiellement à fournir une optique quasi-sphérique réfléchissante dans le domaine des rayons X, pour travailler en incidence quasi-normale.

Le miroir connu comprend une structure multicouches réfléchissante dans le domaine des rayons X, à une longueur d'onde proche de 4,5 nm. Cette structure est constituée par 152 couches alternées d'un matériau lourd, tel que le tungstène d'épaisseur environ 0,76 nm, et d'un matériau espaceur tel que le carbone d'épaisseur environ 1,5 nm. Les épaisseurs des couches sont prévues pour que le miroir soit monochromatique et évite ainsi l'adjonction de filtres. La structure multicouches réfléchissante est réalisée d'abord sur un substrat plan circulaire, en silicium, de diamètre environ 76 mm et d'épaisseur environ 380 $\mu$m.

Pour obtenir une bonne qualité des couches, l'état de surface du silicium est prévu aussi lisse que possible. A cet effet une rugosité aussi faible que 0,3 nm environ est obtenue par polissage, avant la réalisation de la structure multicouches. Puis ce miroir plan est associé à une monture pour lui donner une forme concave. Cette monture comprend un premier appui annulaire supportant le substrat du côté du miroir, à une certaine distance de son centre pour laisser libre le champ optique utile du miroir, et un second appui annulaire pressant le substrat à sa périphérie sur la face opposée au miroir. Cette monture comprend aussi un micromètre pour régler cette pression. Par la pression ainsi exercée sur le substrat en silicium, le miroir plan atteint une configuration concave, avec un rayon de courbure d'environ 1 m, sans perturber notablement la structure multicouches préalablement réalisée.

Le miroir concave ainsi constitué ne forme pas totalement une optique sphérique, mais néanmoins forme une optique de révolution, et peut réfléchir des rayons X incidents presque perpendiculairement, par exemple des rayons ayant un angle d'incidence vis-à-vis de la normale d'environ 1°.

Selon le document cité, la réflectivité maximale n'était pas exactement centrée sur la longueur d'onde de la source de rayons X utilisée, et de ce fait seulement 6 % des rayons incidents à la longueur d'onde de 4,5 nm étaient réfléchis.

Ainsi le document cité n'enseigne pas à surmonter plusieurs autres problèmes qui apparaissent lorsque l'on cherche à réaliser un miroir pour un spectromètre de fluorescence ou un diffractomètre à rayons X.

En premier lieu, ces appareils sont actuellement le plus souvent utilisés pour caractériser des matériaux semiconducteurs, y compris des matériaux incluant du silicium et dans ce cas le spectre de fluorescence parasite du miroir en silicium, ou les pics de diffractions, perturbent les résultats de la caractérisation.

L'utilisation comme substrat d'un matériau de même nature que les échantillons étudiés doit donc être évitée.

En second lieu, dans les applications envisagées aux rayons X ou aux neutrons, la loi de Bragg qui se formule :

$$2d \sin\theta = k\lambda$$

doit être appliquée. Cette relation s'interprète de la façon suivante :

Un miroir pour rayons X ou pour neutrons est, selon l'état de la technique connu de l'homme du métier, réalisé au moyen de systèmes bi-couches d'épaisseur d, empilés pour former une structure multicouches réfléchissante à une longueur d'onde $\lambda$ donnée.

L'angle $\theta$ est l'angle de Bragg, c'est-à-dire l'angle que fait l'axe du pinceau lumineux incident sur le miroir avec la surface du miroir.

Dans un dispositif à rayons X ou neutrons, la source est choisie au départ, donc $\lambda$ est imposé et fixe. D'autre part, le miroir est également réalisé et monté dans le dispositif, donc l'épaisseur d des systèmes bi-couches est fixe et déterminée à priori.

Il en résulte qu'un miroir donné, inclus dans un dispositif donné, fonctionnant à une longueur d'onde donnée, n'admet de recevoir un faisceau que sous un certain angle de Bragg, avec une approximation qui dépend de la largeur du pic de Bragg à k donné, par exemple k = 1. La largeur d'un pic de Bragg étant très faible, il en résulte que l'angle de Bragg est délimité d'une manière assez stricte autour de la valeur centrale donnée par la relation de Bragg.

Cela signifie que tout rayon incident sur le miroir avec un angle de Bragg trop éloigné de

l'angle $\theta$ déterminé par la relation de Bragg n'est pas réfléchi, et donc que la réflectivité du miroir est d'autant plus faible que le faisceau incident est plus divergent.

Or les dispositifs à rayons X ou à neutrons, cités plus haut, comprennent au moins une fente de collimation du faisceau qui vient frapper le miroir. Ce qui fait que le faisceau arrivant sur le miroir est obligatoirement divergent. Donc une très grande partie des rayons n'atteint pas le miroir sous l'angle de Bragg, dans le cas par exemple où le miroir est plan. Il en résulte que la réflectivité d'un tel miroir plan est faible, s'il est utilisé pour les applications envisagées.

Le problème technique qui se pose est donc de fournir un miroir dont la configuration est spécialement adaptée à recevoir, sous l'angle de Bragg déterminé par la loi de Bragg, le maximum des rayons d'un faisceau divergent issu d'une fente de collimation. Autrement dit, dans le faisceau qui diverge de manière différente dans deux directions perpendiculaires, tous les rayons, ou le plus grand nombre d'entre eux, doivent atteindre le miroir sous l'angle de Bragg imposé, ceci dans le but d'atteindre une réflectivité maximale du miroir.

Pour résoudre ce problème technique, le miroir connu de l'état de la technique et qui a une structure de révolution, ne convient pas plus qu'un miroir plan, du fait que le faisceau collimaté par la fente n'a pas de symétrie de révolution. De plus le miroir connu n'est capable d'être formé qu'avec un très grand rayon de courbure d'1 m.

Ainsi il s'avère que pour résoudre le problème technique posé, il faut disposer d'un miroir multicouches auquel on puisse donner une configuration très spéciale, donc que l'on puisse déformer beaucoup plus fortement que le miroir à substrat de silicium connu, et ceci dans des directions spécifiques données.

En troisième lieu, il est indispensable que le substrat ait un état de surface de grande qualité, comme il était déjà connu de l'état de la technique. En effet l'édification ultérieure d'une structure multicouches uniforme ne peut être réalisée que si le substrat est suffisamment lisse, afin que les défauts éventuels du substrat ne se propagent pas en s'amplifiant, lorsque le nombre des couches augmente. Cependant, dans le document cité, la faible rugosité de l'état de surface du substrat était le résultat d'un polissage soigneux, qui est une opération longue et coûteuse sur le plan industriel, faisant intervenir un ouvrier spécialisé. Il est donc souhaitable de rechercher, pour réaliser un miroir apte à résoudre les problèmes techniques posés plus haut, un substrat qui soit à la fois aussi peu rugueux et moins coûteux que le substrat connu.

En outre des systèmes multicouches ne peuvent être réalisés sur un substrat non plan. Le substrat doit donc être rendu concave après la réalisation de la structure multicouches.

Ces buts sont atteints au moyen d'un dispositif tel que défini dans le préambule de la revendication 1, caractérisé en ce que le substrat du miroir est constitué par une feuille de mica dont les faces sont des plans de clivage préférentiel et sont courbées pour que le miroir présente une forme de partie de tube, la structure multicouches étant disposée dans la concavité ainsi formée, le(s) rayon(s) de courbure du miroir étant prévu(s) pour que ce dernier reçoive et réfléchisse chacun des rayons d'un faisceau divergent, sous un angle de Bragg $\theta$ constant, choisi en fonction de la période d de la structure multicouches et de la longueur d'onde $\lambda$ pour vérifier la loi de Bragg qui s'énonce 2d sin$\theta$ = k$\lambda$ où k est une constante.

L'avantage obtenu selon l'invention est qu'en utilisant comme substrat une feuille de mica, on dispose d'un matériau très souple, particulièrement approprié à être courbé en forme de partie de tube. Le rayon du tube peut être aussi faible que 5 cm et peut être choisi parmi une infinité d'autres valeurs du fait de la flexibilité du mica.

Un autre avantage obtenu selon l'invention est que les faces de clivage du mica sont particulièrement lisses et appropriées à recevoir les couches de la structure réfléchissante, sans nécessiter l'opération coûteuse de polissage.

Ainsi en courbant de manière appropriée la structure multicouches réalisée sur une feuille de mica, on peut obtenir qu'au point d'incidence d'une direction particulière dans le faisceau de RX ou de neutrons, la courbure soit telle que la tangente à la feuille de mica en ce point fasse avec ce rayon l'angle de Bragg $\theta$ qui permet de vérifier la relation 2d sin$\theta$ = k$\lambda$, dans laquelle la période d et la longueur d'onde $\lambda$ de la source, sont prédéterminées.

Le problème de l'obtention d'une réflectivité maximale est alors résolu.

Une bonne mise en oeuvre de l'invention est obtenue lorsque la forme de partie de tube du miroir est selon une partie de la surface latérale d'un cylindre.

Mais si une fente émet le faisceau divergent, les rayons divergent différemment dans deux directions perpendiculaires.

C'est pourquoi une mise en oeuvre améliorée de l'invention est obtenue lorsque la forme de partie de tube du miroir est selon une partie de la surface latérale d'un tore.

Une autre mise en oeuvre améliorée de l'invention est obtenue lorsque la forme de partie de tube du miroir est selon une partie de la surface latérale d'un ellipsoïde.

Dans une mise en oeuvre, la structure multicouches réfléchissante est constituée par la superposition de systèmes bi-couches ou tri-couches d'épaisseur d constituant la période de la structure multicouches, chaque système comprenant au moins une couche de matériau réflecteur et une couche de matériau espaceur dans le domaine de longueur d'onde λ donné.

Pour l'application au domaine des rayons X, la structure multicouches réfléchissante sera de préférence constituée par la superposition de systèmes bi-couches formés d'une couche de nickel comme matériau réflecteur et d'une couche de carbone comme matériau espaceur.

Pour l'application au domaine des neutrons, la structure multicouches réfléchissante sera de préférence constituée par la superposition de systèmes bi-couches formés d'une couche de nickel comme matériau réflecteur et d'une couche de titane comme matériau espaceur.

Dans chacun des cas, la couche de matériau réflecteur aura de préférence une épaisseur de l'ordre de 1,5 nm et la couche de matériau espaceur, de préférence une épaisseur de l'ordre de 3 nm, tous les systèmes bi-couches de la structure multicouches étant identiques entre eux et en nombre d'environ 50, ou bien en nombre supérieur à 50.

Dans une mise en oeuvre, les couches ont une épaisseur uniforme sur toute la surface du miroir et ont la même épaisseur dans toute la structure multicouches.

Dans une mise en oeuvre améliorée, les couches ont une épaisseur changeant graduellement en fonction de la région du miroir où elles sont disposées, pour compenser par cette variation d'épaisseur dans ces régions des variations de l'angle $\theta$ de Bragg des rayons incidents dans ces régions, de manière à ce que la loi de Bragg soit vérifiée dans toutes les régions du miroir.

L'invention est décrite ci-après en détail en référence avec les figures schématiques annexées parmi lesquelles :

- la figure 1 représente en coupe une structure de miroir multicouches dans sa forme plane ;
- la figure 2 représente en perspective un miroir pour rayons X ou pour neutrons ayant une forme concave cylindrique d'axe longitudinal XX' ;
- la figure 3 représente en perspective un miroir pour rayons X ou pour neutrons ayant une forme concave ellipsoïdale de grand axe parallèle à XX' et de petit axe parallèle à YY' ;
- la figure 4 représente schématiquement en coupe, parallèlement au plan (ZZ', YY'), un dispositif optique incluant un miroir concave multicouches pour réfléchir un faisceau divergent issu d'une fente.

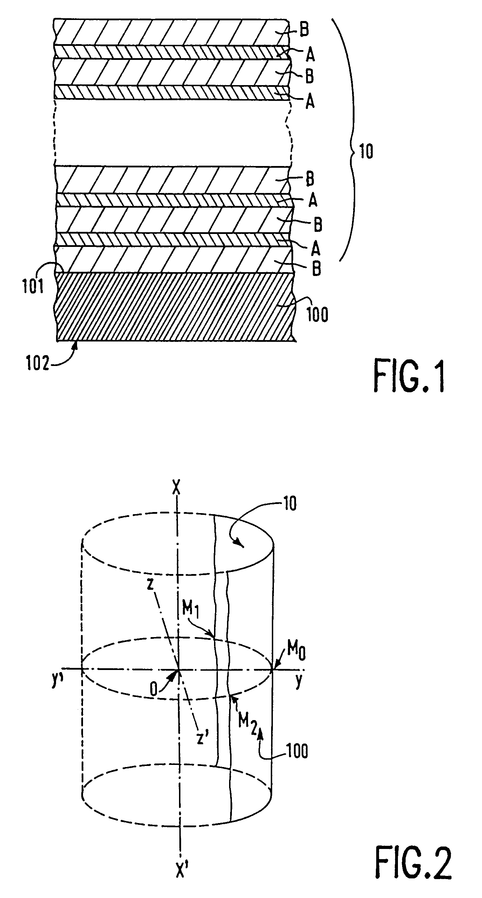

En référence avec la figure 1, un miroir plan multicouches est représenté en coupe. Ce miroir comprend un substrat 100, constitué par une feuille de mica dont les faces 101 et 102 sont obtenues par clivage d'un bloc de mica selon le plan de clivage préférentiel. On peut par exemple se procurer une feuille de mica appropriée à mettre en oeuvre l'invention chez la société METAFIX à Montdidier (80500-France) référence CLSS "scratchless".

Les épaisseurs préférées vont de 20 à 50 μm. Les dimensions préférées mesurées parallèlement au plan de clivage vont de 50 x 50 mm à 150 x 150 mm.

Des épaisseurs entre 10 et 200 μm peuvent être obtenues par clivage du mica et des dimensions parallèlement au plan de clivage peuvent être très variables avec une même épaisseur et aussi en fonction de l'épaisseur.

Le miroir comprend de plus, réalisée sur une des faces de clivage du substrat en mica, par exemple sur la face 101, une structure multicouches périodique, de période d, réfléchissante dans le domaine des rayons X ou dans le domaine des neutrons.

La structure multicouches 10 est constituée par exemple de la superposition de systèmes bi-couches A, B, d'épaisseur d, formés chacun d'une couche A de matériau réflecteur et d'une couche B de matériau espaceur. Les matériaux sont choisis pour présenter des indices optiques aussi différents que possible l'un de l'autre, tout en étant transparents au rayonnement de longueur d'onde utilisé.

Par exemple, pour l'utilisation du miroir multicouches dans le domaine des rayons X, à une longueur d'onde de 4,5 nm, chaque système bi-couches est de préférence formé par l'association d'une couche A de nickel comme matériau réflecteur et d'une couche B de carbone comme matériau espaceur.

Dans un autre exemple, pour l'utilisation du miroir multicouches dans le domaine des neutrons, à une longueur d'onde de l'ordre de 1 nm, chaque système bi-couches est de préférence formé par l'association d'une couche A de nickel comme matériau réflecteur et d'une couche B de titane comme matériau espaceur.

Dans l'un et l'autre cas, la couche A de matériau réflecteur aura de préférence une épaisseur de l'ordre de 1,5 nm, et la couche B de matériau espaceur aura de préférence une épaisseur de l'ordre de 3 nm. Ainsi la période d, ou épaisseur du bi-couches sera 4,5 nm.

Dans une structure multicouches donnée, tous les systèmes bi-couches superposés seront aussi identiques que possible de manière à obtenir une réflectivité aussi élevée que possible à la longueur d'onde choisie.

De façon préférentielle, on réalisera d'abord, en contact avec le substrat, une couche de type B espaceur, comme couche tampon. L'empilement des systèmes bi-couches A, B commencera ensuite par une couche A de matériau réflecteur et se terminera pas une couche B de matériau espaceur.

Pour obtenir une réflectivité convenable du miroir, de l'ordre de 50 %, il est souhaitable d'empiler environ 50 systèmes bi-couches. La réflectivité augmente lorsque l'on augmente le nombre de systèmes bi-couches dans l'empilement 10.

Pour le mica choisi comme substrat 100, l'état de surface des faces de clivage préférentiel est très lisse. La rugosité de surface est de l'ordre de 0,3 nm à 0,4 nm. Mais à la différence du dispositif connu de l'état de la technique, cet état de surface est tès facile à obtenir puisqu'il ne résulte pas d'un polissage soigneux, mais qu'il est obtenu automatiquement du fait du simple clivage.

Les couches A, B de la structure multicouches peuvent être réalisées par exemple par pulvérisation par diode R.F sous ultra-vide. La preuve a été faite lors de l'expérimentation que la qualité des couches du dépôt multicouches sur mica est aussi bonne que la qualité des couches déposées sur silicium.

Le substrat en mica qui a été utilisé dans la mise en oeuvre était une muscovite naturelle qui cristallise dans le système monoclinique. Ce cristal possède un clivage parfait, flexible et élastique. Le plan de symétrie du monocristal est perpendiculaire au clivage. Il existe par ailleurs un extrêmement grand nombre de micas également utilisables dont la diversité chimique est très vaste, mais dont la parenté cristalline est étroite.

En effet, des recherches ont montré que, si la composition chimique, les paramètres cristallins, le groupe de symétrie, la densité sont variables d'un mica à l'autre, cependant le motif cristallin possède toujours des nombres d'atomes d'oxygène et de fluor tels que O + F = 12. La composition chimique de tous les micas se traduit par la formule générale :

$$XY_{2-3}(Si,Al)_4 O_{10}(OH,F)_2,$$

dans laquelle X est généralement K, plus rarement Na ou Ca, et dans laquelle Y est Al, Mg ou bien Fe.

D'autre part, Fe et Ti peuvent aussi remplacer Si et Al.

Dans le cas de la muscovite monoclinique naturelle les paramètres cristallins sont :

    a = 0,519 nm
    b = 0,904 nm
    c = 2,008 nm
avec un angle $\beta$ = 95°30'.

Le plan de clivage est celui déterminé par (c sin$\beta$, b) perpendiculaire à a.

La densité est de l'ordre 2,80, donc la maille contient deux feuillets élémentaires, d'où le nom de muscovite 2 M.

La muscovite est le mica dioctaédrique (c'est-à-dire où le nombre des ions Y est deux) le plus commun. Elle est stable jusqu'à la température de 700°C, à partir de laquelle elle commence à se déshydrater.

Il existe aussi dans le commerce (METAFIX par exemple) un autre mica courant : la phlogopite qui est trioctaédrique trisilicique qui est stable jusqu'à la température de 1050°C à partir de laquelle elle commence à se déshydrater.

Le substrat 100 de la structure multicouches réfléchissante 10, a été choisi en mica pour résoudre les différents aspects du problème technique auquel l'invention se propose d'apporter une solution.

Tout d'abord, pour la réalisation d'optiques dans les spectromètres de fluorescence, ou diffractomètres à rayons X, qui sont le plus souvent utilisés à la caractérisation des matériaux semiconducteurs III-V ou II-VI, le mica n'offre pas de spectre de fluorescence parasite ou de pics de diffraction gênants.

Ensuite, pour la réalisation desdits appareils, ainsi que des synchrotrons par exemple, la lumière traverse une fente de collimation avant d'être réfléchie par un miroir réfléchissant dans le domaine des longueurs d'onde utilisé. Une fente possède par définition une dimension longitudinale supérieure à sa dimension transversale.

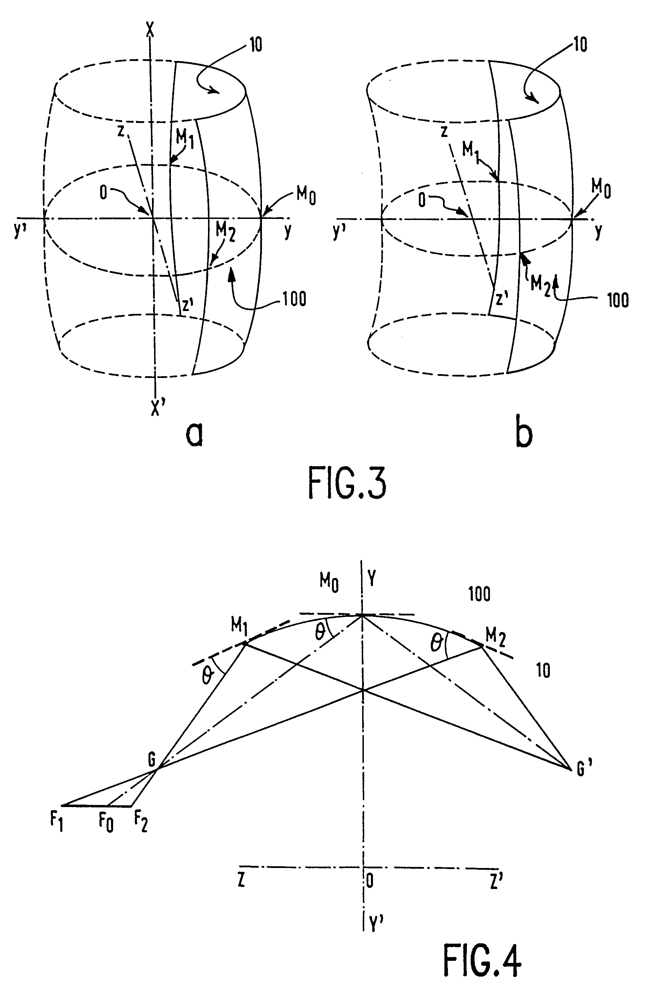

Les figures 2, 3a et 3b représentent trois exemples de configurations de miroirs apportant une solution à la réalisation d'optiques réfléchissantes applicables dans les dispositifs à rayons X ou à neutrons cités plus haut.

D'une façon générale, les miroirs sur substrat en mica sont courbés selon une forme de partie de tube.

En référence avec la figure 2, le miroir en forme de partie de tube a une forme de partie de cylindre droit, d'axe longitudinal XX', à base circulaire. Le substrat 100 coïncide avec la surface externe du cylindre et la partie réfléchissante 10 est située dans la concavité ainsi formée, c'est-à-dire en regard de l'intérieur du cylindre.

Avec un substrat constitué d'une feuille de mica flexible et élastique, comme décrit précédemment, l'axe XX' peut être parallèle à n'importe quelle direction du plan de clivage, c'est-à-dire n'importe quelle direction de la feuille de 50 x 50 mm ou 150 x 150 mm par exemple ; aussi bien une direction parallèle à un bord qu'une direction parallèle à une diagonale. D'une façon générale, on choisira plutôt la direction XX parallèle à un bord de la feuille carrée de mica telle que l'on se la procure dans le commerce.

Avec une feuille de mica telle que décrite plus haut, on peut obtenir en essais de laboratoire des rayons de courbure aussi faibles que 50 mm, c'est-à-dire 20 fois plus faibles que ce qui est possible si le substrat est en silicium. On obtiendra ainsi un miroir très convergent selon une direction. Dans les applications industrielles, on utilisera ces feuilles de mica pour obtenir des rayons de courbures entre 50 mm et 500 mn et le plus souvent de l'ordre de 100 mm, avec une dimension L du côté de la feuille carrée de mica entre 70 et 120 mm.

Les conditions de la courbure du substrat sont imposées par la loi de Bragg, car dans le domaine de longueur d'onde des rayons X mous :

1 nm$\leq\lambda\leq$30 nm ; par exemple, pour une mise en oeuvre, on peut avoir $\lambda \simeq$ 4,5 nm ou des neutrons froids :

0,1 nm$\leq\lambda\leq$1 nm ; par exemple, pour une mise en oeuvre, on peut avoir $\lambda \simeq$ 1 nm.

Dans le cas de ces exemples de mise en oeuvre, les miroirs réfléchissants sont réalisés par des structures multicouches périodiques de période d comme montré sur la figure 1. Au moyen de ces structures périodiques la réflectivité montre des maxima en forme de pic selon la loi de Bragg :

$$2d \sin\theta = k\lambda$$

où $\lambda$ est la longueur d'onde fixée par la source de rayons X ou de neutrons,

où d est la période fixée lors de la réalisation du miroir, et

où $\theta$ est l'angle de Bragg, c'est-à-dire l'angle que fait un rayon du faisceau incident avec le plan du miroir ou bien avec la tangente au miroir au point d'incidence, si le miroir est courbe

k est l'ordre de réflexion qui avait été choisi = 1.

Du fait que le faisceau incident sur le miroir, étant par exemple issu d'une fente, est divergent, l'angle de Bragg $\theta$ varierait selon que l'on considère un rayon du faisceau ou bien un autre rayon du faisceau, si le miroir était plan.

Du fait d'autre part que les paramètres d et $\lambda$ de la source et du miroir sont fixés a priori, si l'on désire obtenir le maximum de réflectivité du miroir, il est impératif que l'angle de Bragg $\theta$ soit le même pour tous les rayons du faisceau ou pour le maximum d'entre eux, afin de vérifier la loi de Bragg.

C'est pourquoi selon l'invention le substrat du miroir est courbé de manière à obtenir que la plupart des rayons d'un faisceau divergent arrive sur le miroir sous l'angle de Bragg $\theta$ souhaité pour vérifier la loi de Bragg. Ainsi la réflectivité est maximale.

C'est pourquoi la section droite du miroir en forme de partie de tube peut être une partie de cercle, une partie d'ellipse, ou une courbe quelconque appropriée à ce que les rayons incidents aient un angle $\theta$ défini par la loi de Bragg citée plus haut. Le miroir peut être une partie de cylindre droit, comme montré sur la figure 2.

Le faisceau divergent issu d'une fente étant comme on l'a dit plus haut, plus divergent longitudinalement que transversalement, on pourra aussi utiliser, pour corriger les variations de $\theta$, en référence avec la figure 3b, un miroir réfléchissant ayant une forme de partie de tore.

Dans ce dernier cas, la feuille de mica servant de substrat à la structure multicouches est courbée selon deux directions. L'un des rayons de courbure peut être très faible de l'ordre de 100 mm comme on a vu précédemment, le second rayon de courbure étant plus grand par exemple proche de 1 m.

En référence avec la figure 3a, un miroir réfléchissant ayant une forme de partie d'ellipsoïde peut aussi être utilisé.

Le mica étant un matériau très flexible, la première courbure pour obtenir une forme de partie de tube est très facile à réaliser. Après réalisation de la structure réfléchissante 100, il suffit de maintenir le substrat 10 par collage sur une préforme, ou par aspiration, ou par tout moyen connu de l'homme du métier mécanicien.

Mais le mica est un matériau qui possède une certaine résistance à la traction ; il est donc plus difficile d'obtenir les autres rayons de courbures afin de parvenir aux formes ellipsoïdales ou toriques des figures 3a et 3b. Selon l'invention, cela n'est pas gênant du fait que pour s'appliquer au faisceau issu d'une fente, ces autres rayons de courbure peuvent être grands.

De plus, il faut savoir que les couches formant la structure périodique 100 sont améliorées par un recuit dans un domaine de température compris entre 150 et 300°C. A cette température le mica n'est pas détérioré et se prête plus facilement qu'à froid à être mis en forme pour permettre d'obtenir les autres rayons de courbures montrés sur les figures 3a et 3b.

Un autre procédé pour compenser la divergence du faisceau dans les directions où le mica est moins flexible peut par ailleurs être mis en oeuvre.

Ce procédé nécessite de réaliser un calcul préalable de la divergence $\pm \Delta\theta$ du faisceau autour de la valeur moyenne $\theta$, et, en appliquant la loi de Bragg, de réaliser le calcul de la variation $\pm \Delta d$ de la période d des couches qui permet de compenser la variation $\pm \Delta\theta$ pour vérifier la loi de Bragg.

On réalise alors un miroir ayant une structure multicouches réfléchissante dont la période d varie graduellement dans certaine région du miroir. Par exemple, le miroir présentera de part et d'autre d'une région où la période est d, deux régions où la période devient graduellement d + Δd, et d - Δd.

Dans la région de période d, la réflectivité du miroir sera maximale lorsque l'angle de Bragg sera $\theta$, et dans les régions de période d ± Δd la réflectivité du miroir sera maximale lorsque l'angle de Bragg sera $\theta$ ± Δθ, résultant de la divergence du faisceau.

La figure 4 montre comment un faisceau divergent (GM$_1$ , GM$_2$) issu d'une fente G, est réfléchi sous l'angle de Bragg $\theta$ grâce à la courbure de la structure multicouches 10 sur le substrat 100, qui dans le cas représenté est une partie de cylindre vue en coupe transversale. Le faisceau réfléchi est (M$_1$G', M$_2$G'). Le rayon de courbure est OM$_0$. Le plan de coupe est Y'Y, Z'Z de la figure 2. L'image de la fente G est obtenue en G'.

Dans ces conditions, si la fente de collimation G fournit un faisceau divergent issu de l'illumination d'un objet F$_1$F$_2$ par une source de rayons X, on peut obtenir les informations relatives à la caractérisation de l'objet F$_1$F$_2$ en plaçant un détecteur sur le trajet du faisceau réfléchi, après sa traversée d'une seconde fente placée en G'.

## Revendications

1. Dispositif incluant un miroir fonctionnant dans le domaine des rayons X ou des neutrons, à une longueur d'onde $\lambda$, ce miroir comprenant un substrat ayant une face concave et une structure multicouches périodique, de période d, réfléchissante dans le domaine de longueurs d'onde choisi, disposée sur cette face concave du substrat, caractérisé en ce que le substrat du miroir est constitué par une feuille de mica dont les faces sont des plans de clivage préférentiel et sont courbées pour que le miroir présente une forme de partie de tube, la structure multicouches étant disposée dans la concavité ainsi formée, le(s) rayon(s) de courbure du miroir étant prévu(s) pour que ce dernier reçoive et réfléchisse chacun des rayons d'un faisceau divergent sous un angle de Bragg $\theta$ constant, choisi en fonction de la période d de la structure multicouches et de la longueur d'onde $\lambda$ pour vérifier la loi de Bragg qui s'énonce 2d sin$\theta$ = k$\lambda$ où k est une constante.

2. Dispositif selon la revendication 1, caractérisé en ce que le miroir a une forme de partie de tube selon une partie de la surface latérale d'un cylindre.

3. Dispositif selon la revendication 2, caractérisé en ce que le cylindre est droit à base circulaire ou elliptique.

4. Dispositif selon la revendication 1, caractérisé en ce que le miroir a une forme de partie de tube selon une partie de la surface latérale d'un tore.

5. Dispositif selon la revendication 1, caractérisé en ce que le miroir a une forme de partie de tube selon une partie de la surface latérale d'un ellipsoïde.

6. Dispositif selon l'une des revendications 1 à 5, caractérisé en ce que la structure multicouches réfléchissante est constituée par la superposition de systèmes bi-couches ou tri-couches, d'épaisseur d constituant la période de la structure multicouches, chaque système comprenant au moins une couche A d'un matériau réflecteur et une couche B d'un matériau espaceur dans le domaine de longueur d'onde $\lambda$ donné.

7. Dispositif selon la revendication 6, caractérisé en ce que, pour constituer la structure multicouches réfléchissante dans le domaine des rayons X mous entre 1 et 30 nm, les systèmes sont bi-couches, et formés du nickel comme matériau réflecteur et du carbone comme matériau espaceur.

8. Dispositif selon la revendication 6, caractérisé en ce que, pour constituer la structure multicouches réfléchissante dans le domaine des neutrons froids (entre 0,1 et 1 nm), les systèmes sont bi-couches et formés du nickel comme matériau réflecteur et du titane comme matériau espaceur.

9. Dispositif selon l'une des revendications 6 à 8, caractérisé en ce que pour constituer la structure multicouches réfléchissante, les systèmes bi-couches ou tri-couches ont une épaisseur uniforme, et ont la même épaisseur d dans toute la structure réfléchissante.

10. Dispositif selon l'une des revendications 6 à 8, caractérisé en ce que, pour constituer la structure réfléchissante, les systèmes bi-couches ou tri-couches ont une épaisseur d non uniforme pour compenser, par la variation de l'épaisseur d, dans certaines régions du miroir, une variation de l'angle $\theta$ de Bragg des rayons incidents sur ces régions de miroir, de manière à ce que la relation de Bragg soit vérifiée dans toutes les régions du miroir.

11. Utilisation du dispositif selon l'une des revendications 1 à 10, selon laquelle un faisceau divergent de rayons X ou de neutrons est transmis au miroir par le moyen d'une fente de collimation.

12. Procédé de réalisation d'un dispositif selon l'une des revendications 1 à 10, selon lequel on réalise au moins les opérations suivantes : d'abord une plaquette substrat de mica est formée par clivage selon les plans de clivage préférentiels d'un bloc de mica, puis une structure multicouches périodique réfléchissante dans le domaine des rayons X ou des neutrons est réalisée sur une des faces de clivage, à la suite de quoi le substrat muni des couches est courbé pour que le miroir présente une forme de partie de tube, la structure multicouches étant disposée dans la concavité ainsi formée, et le(s) rayon(s) de courbure du miroir étant prévu(s) pour son utilisation sous un angle de Bragg constant avec un faisceau incident divergent.

FIG.1

FIG.2

FIG.3

FIG.4

Office européen
des brevets

**RAPPORT DE RECHERCHE EUROPEENNE**

Numero de la demande

EP    92 20 2839
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 958 363 (NELSON ET AL.)<br>* colonne 7, ligne 10 - ligne 35 *<br>* colonne 12, ligne 22 - ligne 33 *<br>* figure 25 *<br>--- | 1-3,6,9<br>11 | G21K1/06 |
| Y | US-A-2 688 094 (J.W.M. DUMOND)<br>* colonne 3, ligne 13 - ligne 55 *<br>* colonne 4, ligne 14 - ligne 33 * | 1-3,6,9<br>11 | |
| A | * figures 3-5 *<br>--- | 12 | |
| A | PATENT ABSTRACTS OF JAPAN<br>vol. 6, no. 116 (P-125)(994) 29 Juin 1982<br>& JP-A-57 044 840 ( NIPPON DENSHI ) 13<br>Mars 1982<br>* abrégé *<br>--- | 1 | |
| A | THIN SOLID FILMS.<br>vol. 193/4, no. 1/2, 15 Décembre 1990,<br>LAUSANNE CH<br>pages 782 - 787<br>PUIK ET AL. 'Ion-beam-assisted deposition<br>of Ni/C multilayer X-Ray mirrors'<br>* abrégé *<br>--- | 7 | |
| A | NUCLEAR INSTRUMENTS & METHODS IN PHYSICS<br>RESEARCH.<br>vol. B35, no. 2, Décembre 1988, AMSTERDAM<br>NL<br>pages 181 - 190<br>ROSSBACH ET AL. 'The use of focusing<br>supermirror neutron guides to enhance cold<br>neutron fluence rates'<br>* abrégé *<br>--- | 8 | |
| A | GB-A-2 177 580 (ENERGY CONVERSION)<br>* abrégé *<br>* page 5, ligne 58 - ligne 63 *<br>* figure 14 *<br>---<br>-/-- | 10 | |

**DOMAINES TECHNIQUES RECHERCHES (Int. Cl.5)**

G21K

Le présent rapport a été établi pour toutes les revendications

| Lieu de la recherche | Date d'achèvement de la recherche | Examinateur |
|---|---|---|
| LA HAYE | 14 DECEMBRE 1992 | CAPOSTAGNO E. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
............................................................
& : membre de la même famille, document correspondant

EPO FORM 1503 03.82 (P0403)

Office européen
des brevets

RAPPORT DE RECHERCHE EUROPEENNE

Numero de la demande

EP    92 20 2839
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PROCEEDINGS OF SPIE - X-RAY IMAGING II vol. 691, 21 Août 1986, SAN DIEGO, CALIFORNIA pages 58 - 68 G.F. MARSHALL 'Monochromatization by multilayered optics on a cylindrical reflector and on an ellipsoidal focusing ring' * le document en entier * ----- | 4-5 | |
| | | | DOMAINES TECHNIQUES RECHERCHES (Int. Cl.5 ) |

Le présent rapport a été établi pour toutes les revendications

| Lieu de la recherche | Date d'achèvement de la recherche | Examinateur |
|---|---|---|
| LA HAYE | 14 DECEMBRE 1992 | CAPOSTAGNO E. |